# FASCICULE DE BREVET EUROPEEN

(11) **EP 2 670 631 B1**
(45) Date de publication et mention de la délivrance du brevet: **19.11.2014**
(21) Numéro de dépôt: 12705334.6
(22) Date de dépôt: 17.01.2012
(51) Int. Cl.: B60R 19/24

(54) **ENSEMBLE ET PROCEDE POUR MAINTENIR UN PARE-CHOCS ET VEHICULE COMPRENANT UN TEL ENSEMBLE.**
ANORDNUNG UND VERFAHREN ZUM HALTEN EINES STOSSFÄNGERS UND FAHRZEUG MIT EINER DERARTIGEN ANORDNUNG
ARRANGEMENT AND METHOD FOR SUPPORTING A BUMPER AND VEHICLE HAVING SUCH ARRANGEMENT

(30) Priorité: 03.02.2011 FR 1150879
(43) Date de publication de la demande: 11.12.2013
(73) Titulaire: Peugeot Citroën Automobiles SA, 78140 Vélizy Villacoublay (FR); GM Global Technology Operations LLC, Detroit, MI 48265-3000 (US)
(72) Inventeur: D'AMBROSIO, Leonardo, F-91510 Lardy (FR)
(74) Mandataire: Ménès, Catherine
(86) Numéro de dépôt international: PCT/FR2012/050094
(87) Numéro de publication internationale: WO 2012/104514

(56) Documents cités:
- DE-A1- 19 912 267
- FR-A1- 2 816 577
- FR-A1- 2 921 322

## Description

La présente invention concerne un ensemble pour maintenir un pare-chocs en position de fixation sur une structure de véhicule. De plus, la présente invention concerne un véhicule comprenant un tel ensemble. Par ailleurs, la présente invention concerne un procédé pour maintenir un pare-chocs en position de fixation sur une structure de véhicule.

La présente invention trouve notamment application dans le domaine de la fabrication et de l'assemblage de pare-chocs, notamment de pare-chocs arrière, en particulier pour des véhicules automobiles.

FR2921322A1 montre le préamble de la revendication 1 et décrit un ensemble de fixation d'un pare-chocs qui comprend une crosse de pare-chocs, qui est fixée sur un côté de caisse, et une romaine qui est un composant latéral comprenant des moyens de fixation à la structure de façon à verrouiller la crosse dans la position de fixation. L'ensemble de fixation comprend aussi des moyens de liaison adaptés pour guider le composant latéral en translation par rapport à la crosse, entre une position d'engagement et la position de fixation. Le composant latéral et la crosse sont livrés à l'usine d'assemblage ensemble et pré-assemblés, c'est-à-dire dans une position prévue pour faciliter l'assemblage du pare-chocs sur une structure de véhicule.

Cependant, un pare-chocs doit être transporté, sur une distance importante, entre l'usine de fabrication et l'usine d'assemblage. La liaison du composant latéral à la crosse est formée notamment par des glissières. Or, les nombreuses manipulations et/ou les vibrations et chocs subis au cours du transport déplacent parfois le composant latéral par rapport à la crosse. Ainsi, le composant latéral se retrouve dans sa position définitive de fixation, ce qui rend difficile voire impossible à un opérateur d'assembler la crosse et la peau de pare-chocs à la structure d'un véhicule. En effet, les rivets ou vis d'assemblage ne peuvent plus être insérés dans leur logement de la crosse, ce qui impose d'arrêter la chaîne d'assemblage et de remettre en place le composant latéral.

La présente invention vise notamment à résoudre, en tout ou partie, les problèmes mentionnés ci-avant.

A cet effet, l'invention a pour objet un ensemble, pour maintenir un pare-chocs en position de fixation sur une structure de véhicule, l'ensemble comprenant :
- au moins une crosse du pare-chocs, la crosse étant de préférence formée par une aile d'une peau de pare-chocs ;
- au moins un composant latéral comportant des moyens de fixation pour fixer le composant latéral à la structure de façon à maintenir la crosse dans la position de fixation ; et
- des moyens de liaison du composant latéral à la crosse, les moyens de liaison étant adaptés pour guider le composant latéral suivant une direction de translation par rapport à la crosse et entre une position d'engagement, dans laquelle le composant latéral entre en contact avec la crosse, et la position de fixation ;

L'ensemble se caractérise en ce que le composant latéral comprend au moins un butoir et un organe de rappel élastique, l'organe de rappel élastique et un butoir respectif étant liés de sorte que le butoir se trouve en appui contre une surface d'arrêt respective définie par la crosse de façon à caler le composant latéral dans une position intermédiaire en translation entre la position d'engagement et la position de fixation, l'ensemble comprenant un élément de libération agencé pour exercer un effort à l'encontre de l'organe de rappel élastique, lorsque le composant latéral est en position intermédiaire, de façon à libérer le composant latéral en translation vers la position de fixation.

En d'autres termes, le composant latéral est calé en position intermédiaire, avant d'être libéré pour passer en position de fixation.

Ainsi, la crosse et le composant latéral, donc le pare-chocs, peuvent être liés, puis manipulés et transportés entre l'usine de fabrication et l'usine d'assemblage, tout en conservant leur position pré-assemblée qui facilite l'assemblage du pare-chocs sur la structure du véhicule.

Selon un mode de réalisation, l'organe de rappel élastique est formé par une bande agencée pour se déformer suivant une direction transversale à la direction de translation.

Ainsi, une telle bande forme un organe de rappel élastique de forme simple et peu encombrante.

Selon un mode de réalisation, le composant latéral comprend deux butoirs, et la crosse comprend deux surfaces d'arrêt.

Ainsi, de tels butoirs et surfaces d'arrêt permettent d'assurer un calage durable du composant latéral en position intermédiaire.

Selon un mode de réalisation, le ou chaque butoir présente une surface de butée globalement transversale à la direction de translation, et une surface de glissement oblique adaptée pour glisser contre une surface plane de la crosse lorsque le composant latéral est libéré en translation vers la position de fixation.

Ainsi, une telle surface de butée permet un appui stable du butoir sur la surface d'arrêt, et une telle surface de glissement facilite la mise en position intermédiaire du butoir, donc du composant latéral.

Selon un mode de réalisation, les moyens de fixation comprennent un arceau à section en U qui est agencé pour coïncider, lorsque le composant latéral est dans la position de fixation, avec un orifice ménagé dans la crosse, et qui est adapté pour coopérer avec une tige, telle qu'une tige de rivet ou une tige de vis.

Ainsi, un tel arceau et une telle tige permettent de réaliser une fixation résistante du composant latéral sur la crosse.

Selon un mode de réalisation, les moyens de liaison comprennent :
- au moins deux rainures formées par le composant latéral respectif et s'étendant suivant la direction de translation ;
- au moins une lumière ménagée dans la crosse et comprenant un premier bord et un deuxième bord parallèles entre eux de façon à glisser respectivement dans les rainures, et un troisième bord formant au moins une surface d'arrêt.

Ainsi, de telles rainures et une telle lumière permettent de réaliser le guidage et l'appui du composant latéral sur la crosse de façon peu encombrante et fiable.

Selon un mode de réalisation, l'élément de libération comporte un plot lié à la crosse par une lamelle élastiquement déformable.

Ainsi, un tel plot permet à un opérateur de libérer rapidement le ou chaque butoir de façon à déplacer le composant latéral de sa position intermédiaire vers sa position de fixation.

Selon un mode de réalisation, le composant latéral et la crosse sont réalisés en matériau plastique de synthèse.

Ainsi, un tel matériau permet de réaliser un composant latéral et une crosse légers et de formes complexes, notamment en moulage par injection.

De plus, la présente invention a pour objet un véhicule comportant une structure et un pare-chocs, le pare-chocs comprenant une partie centrale, deux crosses et une peau de pare-chocs, le véhicule étant caractérisé en ce qu'il comprend un ensemble tel que précédemment exposé.

Ainsi, un tel véhicule peut être assemblé sans risque d'arrêt de chaîne d'assemblage de son pare-chocs sur sa structure.

Par ailleurs, la présente invention a pour objet un procédé, pour maintenir un pare-chocs en position de fixation sur une structure de véhicule. Le procédé se caractérise en ce qu'il comprend les étapes :
a) mettre en oeuvre un ensemble tel que précédemment exposé ;
b) placer le composant latéral dans la position d'engagement en contact avec la crosse ;
c) guider le composant latéral suivant la direction de translation par rapport à la crosse et vers la position de fixation ; et
d) appuyer le ou chaque butoir contre une surface d'arrêt respective de façon à caler le composant latéral dans la position intermédiaire.

Ainsi, un tel procédé permet de lier l'ensemble en vue de sa manipulation et de son transport entre son usine de fabrication et l'usine d'assemblage.

Selon un mode de réalisation, le procédé comprend en outre les étapes :
e) exercer un effort à l'encontre de l'organe de rappel élastique à l'aide de l'élément de libération de façon à libérer le composant latéral en translation vers la position de fixation ; et
f)fixer l'ensemble sur la structure du véhicule, de préférence au moyen de rivets.

Ainsi, de telles étapes permettent d'assembler un pare-chocs sur la structure d'un véhicule sans risque d'arrêt de chaîne d'assemblage.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective d'un véhicule conforme à l'invention comprenant un ensemble conforme à l'invention, et illustrant une position intermédiaire correspondant à une étape d'un procédé conforme à l'invention ;
- la figure 2 est une vue en perspective, suivant un angle différent de la figure 1, du détail II à la figure 1 ;
- la figure 3 est une vue similaire à la figure 1 et illustrant une position de fixation correspondant à une étape ultérieure du procédé conforme à l'invention ; et
- la figure 4 est une vue similaire à la figure 2 du détail IV à la figure 3.

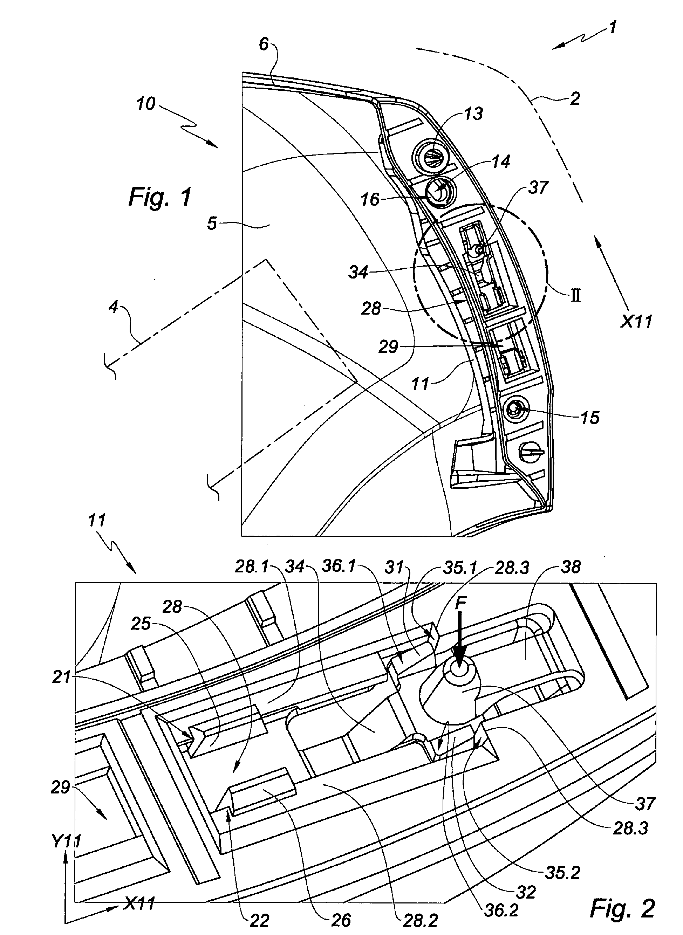

Les figures 1 et 2 illustrent schématiquement un véhicule 1 comportant une structure de caisse qui comprend un châssis et une carrosserie et qui forme un côté de caisse 2 symbolisé en trait mixte. Le véhicule 1 comporte aussi un pare-chocs 4 symbolisé en trait mixte. Le pare-chocs 4 comprend une peau de pare-chocs 5 et une partie centrale non représentée. Dans l'exemple des figures, le pare-chocs 4 est un pare-chocs arrière.

Le véhicule 1 comprend un ensemble 10 qui a notamment pour fonction de maintenir le pare-chocs 4 en position de fixation sur la structure du véhicule 1, en l'occurrence sur le côté de caisse 2. L'ensemble 10 comprend deux crosses du pare-chocs 4, lesquelles sont formées par les ailes de la peau de pare-chocs 5. Une crosse porte la référence 6 à la figure 1. La crosse 6 et le composant latéral 11 sont réalisés en matériau plastique de synthèse.

Dans la présente demande, le terme « latéral » et ses dérivés désigne un élément disposé près de l'un des côtés, droit ou gauche, du véhicule 1. Le terme « latéral » et ses dérivés distingue des éléments suivant une direction qui est perpendiculaire à une direction longitudinale du véhicule suivant laquelle le véhicule 1 avance en marche normale. Dans la présente demande, les termes « avant » et « arrière » se rapportent à la direction longitudinale du véhicule 1.

L'ensemble 10 comprend en outre deux composants latéraux, dont l'un porte la référence 11 à la figure 1. Le composant latéral 11 comporte des moyens de fixation pour fixer le composant latéral 11 au côté de caisse 2 de façon à maintenir la crosse 6 dans la position de fixation.

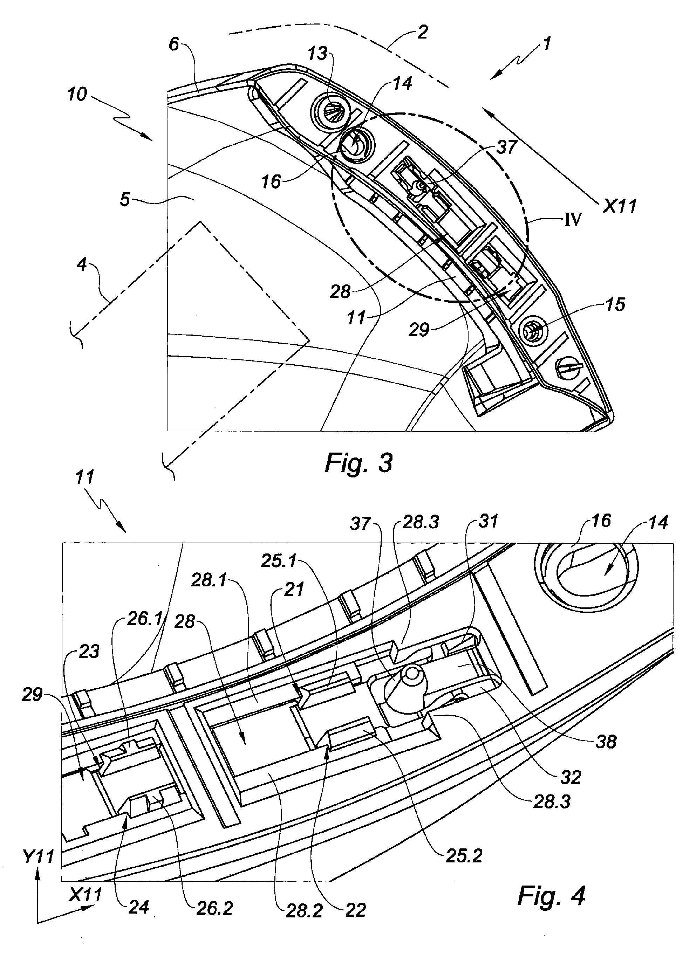

Comme le montrent les figures 2 et 4, les moyens de fixation comprennent :
- un ergot d'encliquetage élastique 13 solidaire de la crosse 6 et destiné à coopérer avec un logement complémentaire non représenté ménagé dans le côté de caisse 2 ;
- des orifices 14 et 15 ménagés dans la crosse 6 et destinés à recevoir des rivets non représentés solidaires du côté de caisse 2 ;
- un arceau 16 à section en U, visible à la figure 4 ; l'arceau 16 est agencé pour coïncider, lorsque le composant latéral 11 est dans la position de fixation de la figure 3, avec l'orifice 14 ; l'arceau 16 est adapté pour coopérer avec une tige du rivet destiné à être introduit dans l'orifice 14.

L'ensemble 10 comprend en outre des moyens de liaison du composant latéral 11 à la crosse 6, qui sont adaptés pour guider le composant latéral 11 suivant une direction de translation X11 par rapport à la crosse 6. Ces moyens de liaison sont adaptés pour guider le composant latéral 11 entre une position d'engagement non représentée, dans laquelle le composant latéral 11 entre en contact avec la crosse 6, et la position de fixation illustrée aux figures 3 et 4. La position d'engagement résulte d'une opération d'assemblage réalisée par un opérateur lors de la fabrication du pare-chocs 4 et de l'ensemble 10.

Comme le montrent les figures 2 et 4, les moyens de liaison comprennent :
- quatre rainures 21, 22, 23 et 24 formées par des coulisseaux respectifs 25.1, 25.2, 26.1 et 26.2 qui appartiennent au composant latéral 11 ; les rainures 21, 22, 23 et 24 s'étendent suivant la direction de translation X11 ;
- deux lumières 28 et 29 ménagées dans la crosse 6 et semblables entre elles ; la lumière 28 comprend un premier bord 28.1 et un deuxième bord 28.2 qui sont parallèles entre eux et à la direction de translation X11, de façon à glisser respectivement dans les rainures 21 et 22.

De plus, le composant latéral 11 comprend deux butoirs 31 et 32 et un organe de rappel élastique formé par une bande 34. La bande 34 est agencée pour se déformer suivant une direction Y11 transversale à la direction de translation X11. La bande 34 et un butoir respectif 31 ou 32 sont liés de sorte que le butoir 31 ou 32 se trouve en appui respectivement contre deux surfaces d'arrêt 35.1 ou 35.2 qui sont définies par la crosse 6. Dans l'exemple des figures, les surfaces d'arrêt 35.1 et 35.2 sont formées par un troisième bord 28.3 de la lumière 28.

Les surfaces d'arrêt 35.1 et 35.2 sont définies de façon à caler le composant latéral 11 dans une position intermédiaire, illustrée aux figures 1 et 2, en translation entre la position d'engagement et la position de fixation, illustrée aux figures 3 et 4.

Chaque butoir 31 ou 32 présente une surface de butée non représentée qui est globalement transversale à la direction de fixation X11. Les surfaces de butée appuient contre les surfaces d'arrêt 35.1 et 35.2, lorsque l'ensemble 10 est dans sa position intermédiaire illustrée aux figures 1 et 2.

De plus, Chaque butoir 31 ou 32 présente une surface de glissement oblique respective 36.1 ou 36.2 qui est adaptée pour glisser contre une surface inférieure plane et non représentée de la crosse 6 lorsque le composant latéral 11 est libéré en translation vers la position de fixation illustrée aux figures 3 et 4.

L'ensemble 10 comprend aussi un élément de libération formé par un plot 37 lié à la crosse 6 par une lamelle 38 élastiquement déformable. Le plot 37 est agencé pour exercer un effort F à l'encontre de la bande 34, lorsque le composant latéral 11 est en position intermédiaire (figures 1 et 2), de façon à libérer le composant latéral 11 en translation vers la position de fixation (figures 3 et 4).

À cet effet, le plot 37 est situé près d'une partie de la bande 34, de sorte qu'un court déplacement du plot 37 induit par l'effort F met en contact le plot 37 et la bande 34. Lorsqu'un opérateur appuie davantage sur le plot 37, le plot 37 repousse la bande 34 et libère les butoirs 31 et 32 des surfaces d'arrêt 35.1 et 35.2.

Pour monter sur le côté de caisse 2 le pare-chocs 4 dans le but de le maintenir en position de fixation, le procédé illustré aux figures 1 à 4 comprend les étapes suivantes :
g) Mettre en oeuvre deux ensembles 10 et équivalents, un pour chaque crosse 6 et équivalente, représentant les ailes latérales de la peau de pare-chocs 5.
h) Placer le composant latéral 11 dans la position d'engagement, en contact avec la crosse 6. Pour cela, un opérateur dispose les coulisseaux 25.1, 25.2, 26.1 et 26.2 respectivement sur les premiers 28.1 et deuxièmes 28.2 bords des lumières 28 et 29.
i)Guider le composant latéral 11 suivant la direction de translation X11 par rapport à la crosse 6 et vers la position de fixation. Pour cela, un opérateur déplace le composant latéral 11 suivant la direction de translation X11.
j)Appuyer chaque butoir 31 ou 32 contre une surface d'arrêt respective 35.1 ou 35.2 de façon à caler le composant latéral 11 dans la position intermédiaire. En d'autres termes, l'opérateur cesse de déplace le composant latéral 11 lorsque les butoirs butent sur la crosse 6.

Dans cette position intermédiaire, l'ensemble 10 et le pare-chocs 4 peuvent être manipulés et transportés par camion, sans risque de déplacer le composant latéral 11 vers la position de fixation, car les butoirs empêchent de glisser le composant latéral 11.

Ce procédé conforme à l'invention comprend en outre les étapes :
k) Exercer un effort F à l'encontre de la bande 34 à l'aide du plot 37, de façon à libérer le composant latéral 11 en translation vers la position de fixation.
I)Fixer l'ensemble 10 sur le côté de caisse 2 au moyen de rivets non représentés. Pour cela, un opérateur insère l'ergot d'encliquetage élastique 13 dans la crosse 6, puis il introduit des rivets dans les orifices 14 et 15. Ensuite, l'opérateur fait coïncider l'arceau 16 avec l'orifice 14. Ainsi, l'arceau 16 peut coopérer avec la tige du rivet introduite dans l'orifice 14.

Ainsi, le pare-chocs 4 est maintenu en position de fixation sur le côté de caisse 2.

Selon d'autres caractéristiques avantageuses mais facultatives, prises isolément ou selon toute combinaison techniquement possible :
- Le composant latéral comprend un seul butoir et la crosse comprend une seule surface d'arrêt.
- Au moins un butoir est réalisé sur la crosse et au moins une surface d'arrêt est réalisée sur le composant latéral.

## Revendications

1. Ensemble (10), pour maintenir un pare-chocs (4) en position de fixation sur une structure (2) de véhicule (1), l'ensemble (10) comprenant :
- au moins une crosse (6) du pare-chocs (4), la crosse (6) étant de préférence formée par une aile d'une peau de pare-chocs (5) ;
- au moins un composant latéral (11) comportant des moyens de fixation pour fixer le composant latéral (11) à la structure (2) de façon à maintenir la crosse (6) dans la position de fixation ; et
- des moyens de liaison du composant latéral (11) à la crosse (6), les moyens de liaison étant adaptés pour guider le composant latéral (11) suivant une direction de translation (X11) par rapport à la crosse (6) et entre une position d'engagement, dans laquelle le composant latéral (11) entre en contact avec la crosse (6), et la position de fixation ;
l'ensemble (10) étant **caractérisé en ce que** le composant latéral (11) comprend au moins un butoir (31, 32) et un organe de rappel élastique (34), l'organe de rappel élastique (34) et un butoir (31, 32) respectif étant liés de sorte que le butoir (31, 32) se trouve en appui contre une surface d'arrêt respective (35.1, 35.2) définie par la crosse (6) de façon à caler le composant latéral (11) dans une position intermédiaire en translation entre la position d'engagement et la position de fixation, l'ensemble (10) comprenant un élément de libération (37) agencé pour exercer un effort (F) à l'encontre de l'organe de rappel élastique (34), lorsque le composant latéral (11) est en position intermédiaire, de façon à libérer le composant latéral (11) en translation vers la position de fixation.

2. Ensemble (10) selon la revendication 1, dans lequel l'organe de rappel élastique (34) est formé par une bande agencée pour se déformer suivant une direction transversale (Y11) à la direction de translation (X11).

3. Ensemble (10) selon l'une des revendications précédentes, dans lequel le composant latéral (11) comprend deux butoirs (31, 32), et la crosse (6) comprend deux surfaces d'arrêt (35.1, 35.2).

4. Ensemble (10) selon l'une des revendications précédentes, dans lequel le ou chaque butoir (31, 32) présente une surface de butée globalement transversale à la direction de translation (X11), et une surface de glissement oblique (36.1, 36.2) adaptée pour glisser contre une surface plane de la crosse (6) lorsque le composant latéral (11) est libéré en translation vers la position de fixation.

5. Ensemble (10) selon l'une des revendications précédentes, dans lequel les moyens de fixation comprennent un arceau (16) à section en U qui est agencé pour coïncider, lorsque le composant latéral (11) est dans la position de fixation, avec un orifice (14) ménagé dans la crosse (6), et qui est adapté pour coopérer avec une tige, telle qu'une tige de rivet ou une tige de vis.

6. Ensemble (10) selon l'une des revendications précédentes, dans lequel les moyens de liaison comprennent :
- au moins deux rainures (21, 22) formées par le composant latéral (11) respectif et s'étendant suivant la direction de translation (X11) ;
- au moins une lumière (28, 29) ménagée dans la crosse (6) et comprenant un premier bord (28.1) et un deuxième bord (28.2) parallèles entre eux de façon à glisser respectivement dans les rainures (21, 22), et un troisième bord (28.3) formant au moins une surface d'arrêt (35.1, 35.2).

7. Ensemble (10) selon la revendication 6, dans lequel l'élément de libération comporte un plot (37) lié à la crosse (6) par une lamelle (38) élastiquement déformable.

8. Véhicule (1) comportant une structure (2) et un pare-chocs (4), le pare-chocs (4) comprenant une partie centrale, deux crosses (6) et une peau de pare-chocs (5), le véhicule (1) étant **caractérisé en ce qu'**il comprend un ensemble (10) selon l'une des revendications précédentes.

9. Procédé, pour maintenir un pare-chocs (4) en position de fixation sur une structure (2) de véhicule (1), le procédé étant **caractérisé en ce qu'**il comprend les étapes :
a) mettre en oeuvre un ensemble (10) selon l'une des revendications 1 à 7;
b) placer le composant latéral (11) dans la position d'engagement en contact avec la crosse (6) ;
c) guider le composant latéral (11) suivant la direction de translation (X11) par rapport à la crosse (6) et vers la position de fixation ; et
d) appuyer le ou chaque butoir (31, 32) contre une surface d'arrêt respective (35.1, 35.2) de façon à caler le composant latéral (11) dans la position intermédiaire.

10. Procédé selon la revendication 9, le procédé étant **caractérisé en ce qu'**il comprend en outre les étapes :
e) exercer un effort (F) à l'encontre de l'organe de rappel élastique (34) à l'aide de l'élément de libération (37) de façon à libérer le composant latéral (11) en translation vers la position de fixation ; et
f) fixer l'ensemble (10) sur la structure (2) du véhicule (1), de préférence au moyen de rivets.

## Patentansprüche

1. Baugruppe (10) zum Halten eines Stoßfängers (4) in Befestigungsposition auf einer Struktur (2) eines Fahrzeugs (1), wobei die Baugruppe (10) Folgendes umfasst:
- mindestens eine Traverse (6) des Stoßfängers (4), wobei die Traverse (6) vorzugsweise aus einem Flügel einer Stoßfängerhaut (5) ausgebildet ist,
- mindestens ein seitliches Bauteil (11), das Befestigungsmittel zum Befestigen des seitlichen Bauteils (11) an der Struktur (2) derart aufweist, dass die Traverse (6) in ihrer Befestigungsposition gehalten wird, und
- Mittel zum Verbinden des seitlichen Bauteils (11) mit der Traverse (6), wobei die Verbindungsmittel angepasst sind, um das seitliche Bauteil (11) entlang einer Verschiebungsrichtung (X11) in Bezug auf die Traverse (6) und zwischen einer Eingriffsposition, in der das seitliche Bauteil (11) mit der Traverse (6) in Berührung tritt, und der Befestigungsposition zu führen,
Baugruppe (10) **dadurch gekennzeichnet, dass** das seitliche Bauteil (11) mindestens einen Anschlag (31, 32) und ein elastisches Rückstellelement (34) umfasst, wobei das elastische Rückstellelement (34) und ein jeweiliger Anschlag (31, 32) derart verbunden sind, dass der Anschlag (31, 32) gegen eine jeweilige Stoppoberfläche (35.1, 35.2) in Anlage ist, die von der Traverse (6) derart definiert ist, dass das seitliche Bauteil (11) in einer Verschiebungszwischenposition zwischen der Eingriffsposition und der Befestigungsposition verkeilt ist, wobei die Baugruppe (10) ein Löseelement (37) umfasst, das eingerichtet ist, um eine Kraft (F) gegen das elastische Rückstellelement (34) auszuüben, wenn das seitliche Bauteil (11) in Zwischenposition ist, so dass das seitliche Bauteil (11) in Verschiebung zu der Befestigungsposition gelöst wird.

2. Baugruppe (10) nach Anspruch 1, bei der das elastische Rückstellelement (34) aus einem Band ausgebildet ist, das eingerichtet ist, um sich entlang einer Querrichtung (Y11) zu der Verschiebungsrichtung (X11) zu verformen.

3. Baugruppe (10) nach einem der vorhergehenden Ansprüche, bei der das seitliche Bauteil (11) zwei Anschläge (31, 32) umfasst und die Traverse (6) zwei Stoppoberflächen (35.1, 35.2) umfasst.

4. Baugruppe (10) nach einem der vorhergehenden Ansprüche, bei der der oder jeder Anschlag (31, 32) eine Anschlagoberfläche insgesamt quer zu der Verschiebungsrichtung (X11) aufweist, und eine schräge Gleitoberfläche (36.1, 36.2), die angepasst ist, um gegen eine flache Oberfläche der Traverse (6) zu gleiten, wenn das seitliche Bauteil (11) in Verschiebung zu der Befestigungsposition gelöst wird.

5. Baugruppe (10) nach einem der vorhergehenden Ansprüche, bei der die Befestigungsmittel einen Bogen (16) mit U-Querschnitt umfassen, der eingerichtet ist, um, wenn das seitliche Bauteil (11) in der Befestigungsposition ist, mit einer Öffnung (14) übereinzustimmen, die in der Traverse (6) eingerichtet und angepasst ist, um mit einem Schaft, wie zum Beispiel mit einem Nietschaft oder einem Schraubenschaft zusammenzuwirken.

6. Baugruppe (10) nach einem der vorhergehenden Ansprüche, bei der die Verbindungsmittel Folgendes umfassen:
- mindestens zwei Rillen (21, 22), die von dem jeweiligen seitlichen Bauteil (11) ausgebildet werden und sich entlang der Verschiebungsrichtung (X11) erstrecken,
- mindestens ein Langloch (28, 29), das in der Traverse (6) angelegt ist und einen ersten Rand (28.1) und einen zweiten Rand (28.2) umfasst, die zueinander derart parallel sind, dass sie jeweils in den Rillen (21, 22) gleiten, und einen dritten Rand (28.3), der mindestens eine Stoppoberfläche (35.1, 35.2) bildet.

7. Baugruppe (10) nach Anspruch 6, bei der das Löseelement einen Klotz (37), der mit der Traverse (6) durch eine Lamelle (38), die elastisch verformbar ist, verbunden ist, umfasst.

8. Fahrzeug (1), das eine Struktur (2) und einen Stoßfänger (4) umfasst, wobei der Stoßfänger (4) einen zentralen Teil, zwei Traversen (6) und eine Stoßfängerhaut (5) umfasst, wobei das Fahrzeug (1) **dadurch gekennzeichnet ist, dass** es eine Baugruppe (10) nach einem der vorhergehenden Ansprüche umfasst.

9. Verfahren zum Halten eines Stoßfängers (4) in Befestigungsposition auf einer Struktur (2) eines Fahrzeugs (1), wobei das Verfahren **dadurch gekennzeichnet ist, dass** es die folgenden Schritte umfasst:
a) Umsetzen einer Baugruppe (10) nach einem der Ansprüche 1 bis 7,
b) Platzieren des seitlichen Bauteils (11) in der Eingriffsposition in Berührung mit der Traverse (6),
c) Führen des seitlichen Bauteils (11) entlang der Verschiebungsrichtung (X11) in Bezug auf die Traverse (6) und zu der Befestigungsposition, und
d) Andrücken des oder jedes Anschlags (31, 32) gegen eine jeweilige Stoppoberfläche (35.1, 35.2) derart, dass das seitliche Bauteil (11) in der Zwischenposition verkeilt ist.

10. Verfahren nach Anspruch 9, wobei das Verfahren **dadurch gekennzeichnet ist, dass** es außerdem die folgenden Schritte umfasst:
e) Ausüben einer Kraft (F) gegen das elastische Rückstellelement (34) mit Hilfe des Löseelements (37) derart, dass das seitliche Bauteil (11) in Verschiebung zu der Befestigungsposition gelöst wird, und
f) Befestigen der Baugruppe (10) auf der Struktur (2) des Fahrzeugs (1), vorzugsweise mit Hilfe von Nieten.

## Claims

1. Assembly (10) for holding a bumper (4) in the fixing position on a structure (2) of a vehicle (1), the assembly (10) comprising:
- at least one tie bar (6) of the bumper (4), the tie bar (6) preferably being formed by a wing of a bumper skin (5);
- at least one lateral component (11) comprising fixing means for fixing the lateral component (11) to the structure (2) so as to hold the tie bar (6) in the fixing position; and
- means for connecting the lateral component (11) to the tie bar (6), the connection means being suitable for guiding the lateral component (11) in a translation direction (X11) with respect to the tie bar (6) and between an engagement position, in which the lateral component (11) comes into contact with the tie bar (6), and the fixing position;
the assembly (10) being **characterised in that** the lateral component (11) comprises at least one buffer (31, 32) and an elastic return member (34), the elastic return member (34) and a respective buffer (31, 32) being connected so that the buffer (31, 32) is situated in abutment against a respective stop surface (35.1, 35.2) defined by the tie bar (6) so as to wedge the lateral component (11) in an intermediate position in translation between the engagement position and the fixing position, the assembly (10) comprising a release element (37) arranged to exert a force (F) against the elastic return member (34), when the lateral component (11) is in the intermediate position, so as to release the lateral component (11) in translation towards the fixing position.

2. Assembly (10) according to claim 1, in which the elastic return member (34) is formed by a strip arranged so as to deform in a direction (Y11) transverse to the translation direction (X11).

3. Assembly (10) according to one of the preceding claims, in which the lateral component (11) comprises two buffers (31, 32), and the tie bar (6) comprises two stop surfaces (35.1, 35.2).

4. Assembly (10) according to one of the preceding claims, in which the or each buffer (31, 32) has a stop surface roughly transverse to the translation direction (X11), and an oblique sliding surface (36.1, 36.2) suitable for sliding against a flat surface of the tie bar (6) when the lateral component (11) is released in translation towards the fixing position.

5. Assembly (10) according to one of the preceding claims, in which the fixing means comprise an arch (16) with a U-shaped cross section that is arranged so as to coincide, when the lateral component (11) is in the fixing position, with an orifice (14) provided in the tie bar (6), and which is suitable for cooperating with a stem, such as a rivet stem or a screw stem.

6. Assembly (10) according to one of the preceding claims, in which the connection means comprise:
- at least two grooves (21, 22) formed by the respective lateral component (11) and extending in the translation direction (X11);
- at least one aperture (28, 29) provided in the tie bar (6) and comprising a first edge (28.1) and a second edge (28.2) parallel to each other so as to slide respectively in the grooves (21, 22), and a third edge (28.3) forming at least one stop surface (35.1, 35.2).

7. Assembly (10) according to claim 6, in which the release element comprises a stud (37) connected to the tie bar (6) by an elastically deformable blade (38).

8. Vehicle (1) comprising a structure (2) and a bumper (4), the bumper (4) comprising a central part, two tie bars (6) and a bumper skin (5), the vehicle (1) being **characterised in that** it comprises an assembly (10) according to one of the preceding claims.

9. Method for holding a bumper (4) in the fixing position on a structure (2) of a vehicle (1), the method being **characterised in that** it comprises the steps of:
a) using an assembly (10) according to one of claims 1 to 7;
b) placing the lateral component (11) in the engagement position in contact with the tie bar (6);
c) guiding the lateral component (11) in the translation direction (X11) with respect to the tie bar (6) and towards the fixing position; and
d) pressing the or each buffer (31, 32) against a respective stop surface (35.1, 35.2) so as to wedge the lateral component (11) in the intermediate position.

10. Method according to claim 9, the method being **characterised in that** it further comprises the steps of:
e) exerting a force (F) against the elastic return member (34) by means of the release element (37) so as to release the lateral component (11) in translation towards the fixing position; and
f) fixing the assembly (10) on the structure (2) of the vehicle (1), preferably by means of rivets.
